# EUROPEAN PATENT APPLICATION

(11) **EP 2 237 135 A2**
(43) Date of publication of application: **06.10.2010**
(21) Application number: 09705182.5
(22) Date of filing: 29.01.2009
(51) Int. Cl.: G06F 3/041

(54) **TOUCH SENSOR PANEL HAVING A SPLIT-ELECTRODE STRUCTURE AND A TOUCH SENSOR DEVICE PROVIDED WITH THE SAME**

(30) Priority: 29.01.2008 KR 20080008857
(71) Applicant: Melfas, Inc., Seoul 153-777 (KR)
(72) Inventor: NAM, Sungsik, Seoul 110-521 (KR)
(74) Representative: Samson & Partner
(86) International application number: PCT/KR2009/000419
(87) International publication number: WO 2009/096706

(57) **Abstract**

A touch sensor panel comprises a plurality of sensing electrodes arranged on one surface of a substrate and a conductive wire connected to one side of each of the plurality of sensing electrodes. Each sensing electrode includes at least one convex portion protruded in the opposite direction of the one side, and at least one concave portion indented towards the one side. For arrangement, the convex portion of each of the said sensing electrodes is inserted into the concave portion of at least one adjacent sensing electrode.

## Description

### Field of the Invention

The present invention relates to a touch sensing panel having a single electrode layer and a touch sensing device provided with the same.

### Background of the Invention

The touch sensing device refers to an input device for sensing positions touched by user thereon and recognizing information about the sensed touch positions as input information to perform a general control of electronic devices including a screen control. The touch sensing device covers a touch pad employed in a notebook computer or the like, a touch screen to sense a touch on a display screen, and the like.

The touch sensing device includes a touch sensing panel in which a sensing signal is generated by a user input, and a touch sensing unit for recognizing the user input using the sensing signal. The touch sensing panel is classified into a resistance film type, a capacitance type and the like depending on a generation of the sensing signal. The touch sensing panel of the capacitance type, in which the touch position is detected based on a change in capacitance due to a touch of the user, has high durability and suitability for a sliding type input. Therefore, the application of the touch sensing panel of the capacitance type has been gradually expanding.

The capacitive touch sensing panel includes a transparent sensing electrode for sensing the change in capacitance. The transparent electrode is formed of a transparent conductive material such as indium tin oxide (ITO). Conventionally, the transparent sensing electrodes are formed as two layers, one of the two layers being used to detect a coordinate in X-direction of the touch position while the other layer being used to detect the coordinate in Y-direction of the touch position. However, for the configuration of the double-layer transparent electrode, it has problems, such as, reduced transparency of the panel, a deteriorated production yield and a raised cost as a process is added. Accordingly, a research about the capacitive touch sensing panel, in which the transparent electrodes are configured in single layer, so-called a single-layer structure, has been performed.

The touch sensing panel having the single-layer structure is advantageous of having a simple configuration, an increased production yield and a low cost. Further, this touch sensing panel is suitable to be applied in an ultra thin electronic device because of its slim thickness. Furthermore, the touch sensing panel is capable of providing a clear display due to a high transparency.

However, the touch sensing panel of the single-layer structure has less freedom for arranging a plurality of transparent electrodes compared with that of the conventional double-layer structure. Therefore, the touch sensing panel has poor accuracy in the detection of touch position.

### Summary of the Invention

In view of the above, the present invention provides a novel single-layer structure suitable for a touch sensing panel.

In accordance with a first aspect of the present invention, there is provided a touch sensing panel including: a plurality of sensing electrodes arranged on a surface of a substrate; and a conductive wire connected to one side of the plurality of the sensing electrodes, wherein each of the sensing electrodes includes: at least one convex part protruded to an opposite direction to the one side, and at least one concave part recessed toward the one side; wherein the convex part in each of the sensing electrodes is disposed to be inserted to the concave part adjacent thereto.

In accordance with a second aspect of the present invention, there is provided a touch sensing panel having a single electrode layer including: a plurality of sensing electrodes to form the electrode layer; wherein at least a part of the plurality of the sensing electrodes is formed to have a saw-like shape and each of the plurality of the sensing electrodes is arranged through a saw tooth thereof to be engaged with at least one of neighboring sensing electrodes.

In accordance with a third aspect of the present invention, there is provided a touch sensing device including: sensing electrodes arranged on a substrate to form a sensing area and extended along with a first axis; a touch sensing unit electrically connected to the respective sensing electrodes; wherein each of the sensing electrodes is divided into a plurality of sub-electrodes extending along the first axis in the sensing area, and wherein at least one sub-electrode dividing another sensing electrodes is disposed between the plurality of sub-electrodes dividing the sensing electrode.

In accordance with an embodiment of the present invention, a calculation error for the sensed position is minimized to enhance detection accuracy. Accordingly, linearity of a touch input is improved.

### Brief Description of the Drawings

The objects and features of the present invention will become apparent from the following description of embodiments given in conjunction with the accompanying drawings, in which:
Fig. 1 shows a schematic plane view of an arrangement of a touch screen panel in accordance with an embodiment of the present invention;
Fig. 2 is a view describing in detail the shape and arrangement of a sensing electrode shown in Fig. 1;
Fig. 3 shows a cross sectional view of the touch screen panel shown in Fig. 1;
Fig. 4 illustrates a change in capacitance caused when a finger of a user is touched on the touch screen panel in accordance with the embodiment of the present invention;
Figs. 5 and 6 are views for exemplifying the procedure of calculating a touch position using the touch screen panel shown in Fig. 1; and
Figs. 7 and 8 are views for explaining an effect in which an accuracy of detecting the touch position is enhanced in accordance with the embodiment of the present invention.

### Detailed Description of the Embodiments

Hereinafter, embodiments of the present invention will be described in detail with reference to the accompanying drawings which form a part hereof. The same or corresponding components will be denoted using the same reference numerals and duplicate description will be omitted.

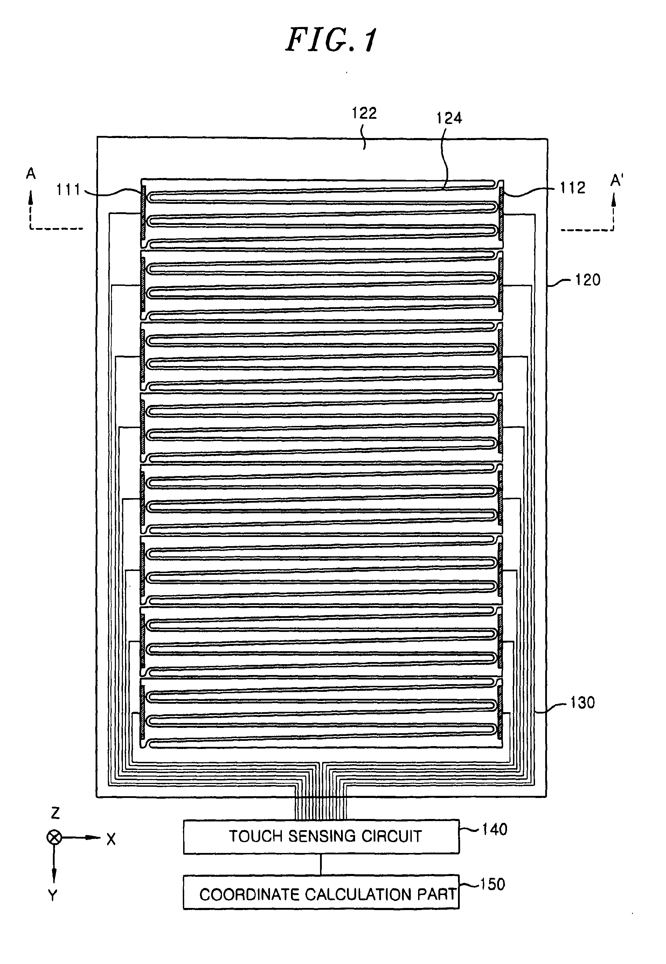

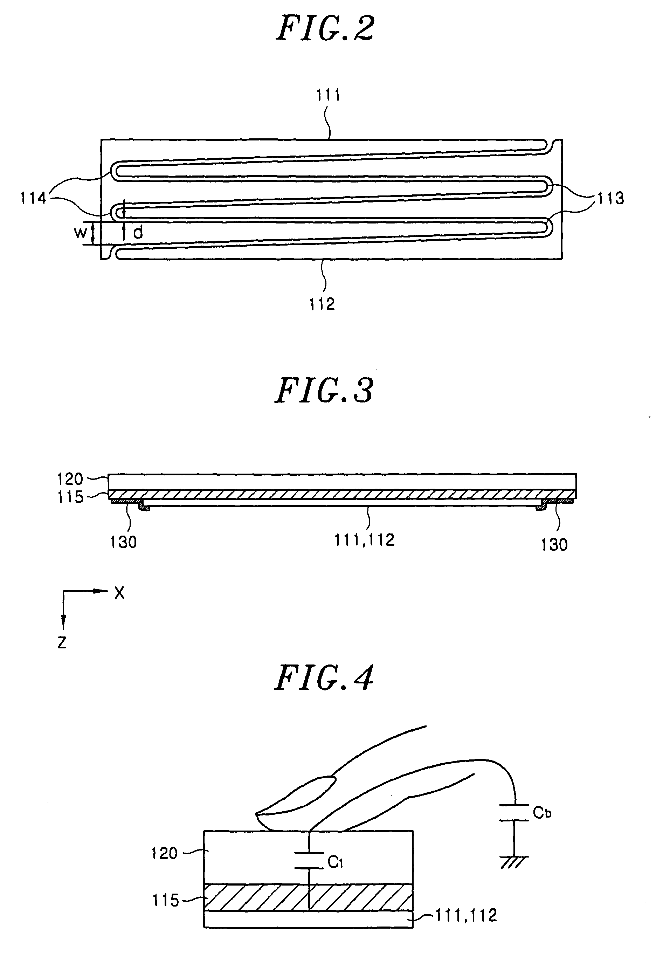

Fig. 1 shows a schematic plane view of an arrangement of a touch sensing panel in accordance with an embodiment of the present invention; and Fig. 2 is a view for describing in detail the shape and arrangement of the sensing electrodes 111 and 112 shown in Fig. 1. Further, Fig. 3 shows a cross sectional view taken along the A-A' line shown in Fig. 1. As shown in the drawings, it will be described hereinafter the lateral direction as an X-direction, the vertical direction as a Y-direction, and the thickness direction as a Z-direction.

Referring to Fig. 1, the respective sensing electrodes 111 and 112 are connected to a conductive wire 130 at each side of the touch sensing panel. The sensing electrodes 111 and 112 include one or more convex parts 113 extended from one edge connected to the conductive wire 130 toward an opponent edge in a sensing area 124; and one or more concave parts 114 indented toward their corresponding one edge. The convex parts 113 of the sensing electrodes 111 and 112 are disposed in between the concave parts 114 of the sensing electrodes 111 and 112.

In an embodiment of the present invention, a pair of the sensing electrodes 111 and 112 forms a rectangular shape, by disposing the convex parts 113 of one sensing electrode in the pair in the concave parts 114 of the other sensing electrode in the pair.

The touch sensing panel of the present invention may be attached on a rear surface of a substrate 120 provided at a front surface of a display screen in an electronic device, as shown in Fig. 3. In a case where the touch sensing panel is attached onto the display screen, the substrate 120 includes a transparent sensing area 124 having the sensing electrodes 111 and 112 disposed thereon; and an opaque bezel area 122 of a display bezel. The substrate 120 may be a part of a casing structure of an electronic device and is formed of a transparent material such as acryl, tempered glass or the like having uniform thickness and permittivity. The bezel area 122 may be formed by depositing, printing or coating pigment on the rear surface of the substrate 120.

On the rear surface of the substrate 120, the sensing electrode pairs 111 and 112 extending in the X-direction on the left and right edges to form a pattern of a comb shape or a saw shape are repeatedly arranged in a plurality of positions in the Y-direction. Each sensing electrode pair 111 and 112 is arranged in a manner that two hypotenuses of the sensing electrodes in the pair are faced each other, wherein proximal end sides having the largest width in the sensing electrode pair are respectively connected to the sensing channels of a touch sensing circuit 140 via the conductive wire 130.

Referring to Fig. 2, the sensing electrode 111 on the left side includes three parallel convex parts 113 extending in the X-direction. Between each of the convex parts 113, the concave parts 114 are formed as indented areas in the sensing electrode 111. The sensing electrode 112 on the right side also includes the same configuration as that of the left side sensing electrode. Furthermore, the two sensing electrodes 111 and 112 are arranged in a manner that the convex parts 113 are alternately disposed into the concave parts 114 of their opponent sensing electrodes, i.e., saw teeth are engaged with each other. Thus, the disposition of the two sensing electrodes 111 and 112 is rendered to be a sensing area in a rectangular shape.

The convex part 113 has a tapered shape in which a width thereof gradually decreases in an extended direction thereof, the width thereof being smaller than a extended length thereof. Such a configuration enables an X-direction coordinate of a touch position to be calculated, which will be described later.

In a case where the touch sensing panel is attached to the display screen of an electronic device, the sensing electrodes 111 and 112 described above are formed of a film-type transparent conductive material such as ITO, IZO, ZnO and the like, which may be manufactured by patterning the transparent conductive material which is applied on a surface of a transparent film 115 using a photolithography or the like. Next, the conductive wire 130 may be formed by printing a conductive metal material such as silver (Ag) and the like on the transparent film 115 with the patterned sensing electrodes 111 and 112 using the silk-screen printing method. As shown in Fig. 3, the transparent film 115 having the sensing electrodes 111 and 112 and the conductive wire 130 formed thereon is then laminated on the rear surface of the substrate 120. Although not shown specifically in Fig. 3, glue such as OCA (optically clear adhesive) may be used to laminate the transparent film 115.

The touch sensing circuit 140, which is electrically connected to each of the sensing electrodes 111 and 112 via the conductive wire 130, senses the capacitance change caused by a touch of a user on the sensing area 124 of the substrate 120. As shown in Fig. 4, when a part of a human body, e.g., a fingertip touches a certain position of the sensing area 124, the capacitance change is caused by a capacitance Cₜ formed in a thickness direction (Z-direction) of the substrate 120 and a human body capacitance C_{b} connected to the capacitance Cₜ in serial to be grounded, based on a modeling of capacitor in which the sensing electrodes 111 and 112 of touched at the corresponding position serve as two electrode plates, and the substrate 120 and the transparent substrate 115 serve as dielectric material. An electrical change corresponding to the capacitance change is sensed by the touch sensing circuit 140 provided with an electric circuit.

A coordinate calculation part 150 calculates X-direction and Y-direction coordinates for a touch position based on data representing the capacitance change obtained by the touch sensing circuit 140. It is preferable that the touch sensing circuit 140 and the coordinate calculation part 150 are implemented with IC (integrated circuit), and are mounted on a flexible board such as FPCB (flexible printed circuit board) and the like. The flexible board mounting the IC is electrically connected to the conductive wire 130 formed on the rear surface of the substrate 120 by bonding. An applicable bonding method includes a bonding method using a film such as ACF (anisotropic conductive film). If the touch sensing device is assembled by forming separately a portion of the touch sensing device to be mounted on a rigid substrate 120 and a portion of the touch sensing device to be mounted on a flexible substrate and then connecting them through the use of the bonding method, it is possible to enhance the effectiveness of assembling the touch sensing device to various types of electronic devices.

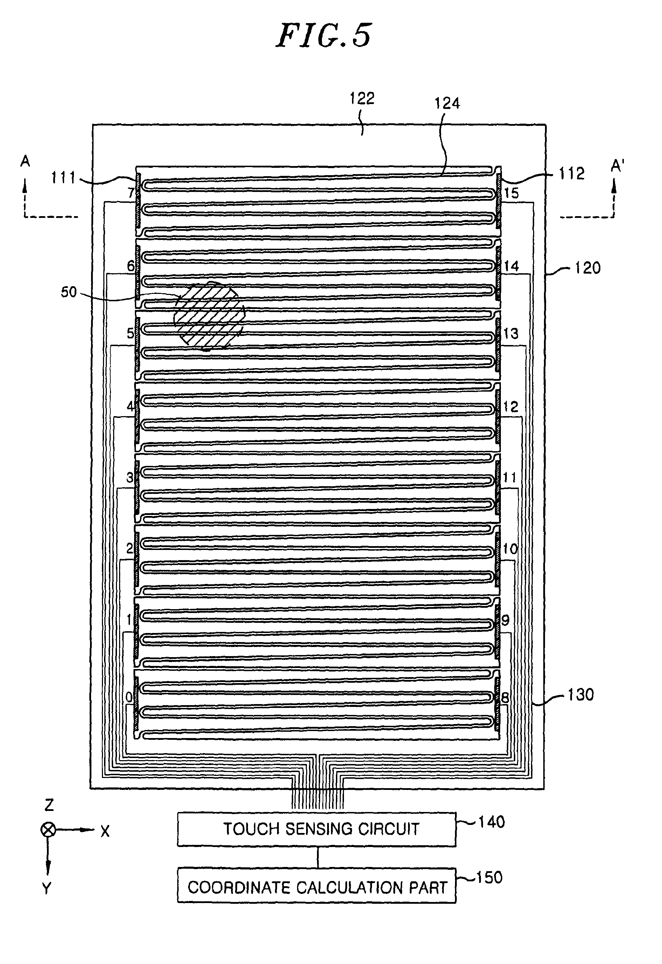

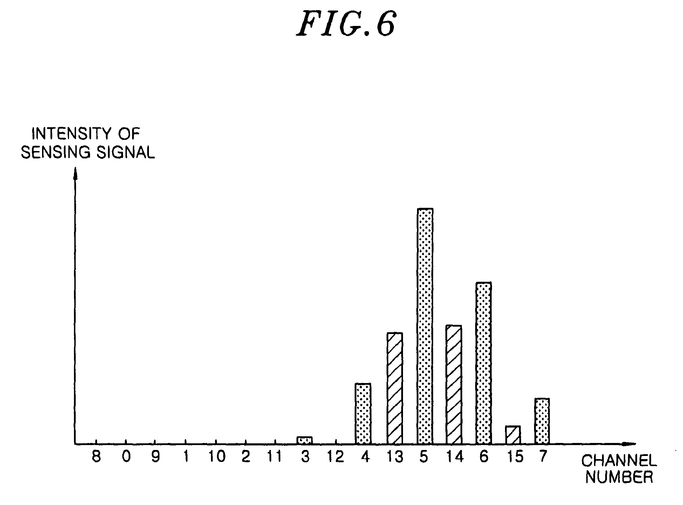

Figs. 5 and 6 are views for exemplifying in detail the process of calculating coordinates in X-direction and Y-direction of a touch position by sensing the capacitance change caused by the touch of the user. As shown in Fig. 5, the touch sensing circuit 140 is concentrated on sixteen separate sensing channels as indicated by Nos. 0 to 15. The touch sensing circuit 140 senses the capacitance change obtained in each of the sensing electrodes 111 and 112 from the sensing channels.

Fig. 5 shows a state in which a part of the user, e.g., a fingertip, touches over the sensing electrodes on the substrate 120 and thus the sensing channels 5, 6, 13 and 14 are connected to each other by the touch. A contact area 50 is represented by a shaded circle. Hereinafter, for convenience, numbers are assigned to individual sensing channels of the sensing electrodes 111 and 112 to refer the respective sensing channels.

Fig. 6 shows a graph representing intensities of touch signals obtained by the touch sensing circuit 140 with respect to each sensing channel. For reference, the touch signal is a signal that reflects an amount of capacitance change, from which effects such as environmental noise, capacitance changes and the like caused by raised temperature of the substrate 120 by the touch of the human body are removed. The touch signal may be represented by an analog voltage or digital value, and the intensity of the touch signal denotes a magnitude of the analog voltage or a magnitude of the digital value.

Referring to Fig. 6, the intensity of the touch signals measured with respect to the sensing electrodes 5, 6, 13, and 14 that are included in the contact area 50 generally have a tendency to be proportional to an area of a portion where the contact area 50 is defined in the sensing electrodes. This is because the capacitance Cₜ formed by the touch is proportional to the contact area due to the characteristics of the capacitance and the human body capacitance C_{b} also increases in proportion to the contact area.

Further, as shown in Fig. 6, the capacitance change may also be sensed in the sensing electrodes of the sensing channels 3, 4, 7 and 15 without having direct touches thereto neighboring the sensing electrodes of the channels 5, 6, 13 and 14. The capacitance change sensed by the neighboring channels may be caused by a fringing component of electric field generated around the contact area 50 and the approached human body. The capacitance change, however, is smaller as the distance becomes farther from the sensing electrodes of the channels 5, 6, 13 and 14 where the direct touch has been made. Furthermore, when compared with the capacitance change in the channel 15 which is connected to the conductive wire 130 at a right end portion thereof, it is found that the capacitance change is relatively large at the channels 4 and 7 that are connected to the conductive wire 130 at a left end portion of thereof, the left end portion being closer to the contact area 50. This is because the width of the convex parts 113 of the sensing electrodes 111 and 112 at one end portion where the conductive wire 130 is connected is larger than that of the other end portion, forming a wider contact area.

Hereinafter, the procedure of calculating coordinates of the X-direction and the Y-direction will be described based on data of the intensity of the touch sensing signals as described above. Different methods for calculating two position coordinates may be conducted, which will be described in detail hereinafter.

First, a calculation for the X-direction coordinate of the touch position is described as follows. The coordinate calculation part 150 calculates a ratio between the intensity of the touch signals obtained from the channels 0 to 7 of the sensing electrodes 111 connected to the conductive wires 130 at the left end portion thereof and that obtained from the channels 8 to 15 of the sensing electrodes 112 connected to the conductive wires 130 at the right end portion. The ratio obtained by the calculation is multiplied by a lateral length of the sensing area 124 to yield a coordinate value ranging from a minimum value of 0 to a maximum value equal to the lateral length of the sensing area 124.

Total intensity of the touch signals obtained from the channels 0 to 7 and the total intensity of the touch signals obtained from the channels 8 to 15 is used in the calculation. However, in order to remove effects from, such as, ambient noise, an approached palm to the substrate 120 when a finger touches or the like, the calculation may be made to employ exclusively data obtained from channels, e.g., the channels 5, 6, 13 and 14 having the intensity of the touch signals larger than a predetermined threshold.

Next, a calculation of the Y-direction coordinate of the touch position is described as follows. The Y-direction coordinate of the touch position on the channels is calculated by obtaining a weighted average wherein a weight becomes the intensity of the touch signal obtained from the corresponding channels with respect to a central position in the Y-direction of the sensing electrodes 111 and 112. Let 'D' be pitch between two adjacent electrodes 111 and 112, e.g., the adjacent electrodes 0 and 1, or the adjacent electrodes 8 and 9, the central position in the Y-direction of the channels 0 to 7 is represented by (n + 0.5) × D. Likewise, the central position in the Y-direction of the channels 8 to 15 is represented by (n-8 + 0.5) × D. The reference numeral 'n' represents the number of the sensing channels of the sensing electrodes 111 and 112.

As described above, the calculation method of the coordinates of the X- and Y-directions of the touch position is implemented by a very simple algorithm including a simple average calculation or a weighted average calculation. Therefore, it is possible to easily implement the touch panel without many operational resources and storage space, and achieve fast coordinate calculation. Further, according to the above methods, even only few sensing electrodes can identify the coordinates of the X- and Y-directions of the touch position.

Figs. 1 and 5 show that the width of the convex part 113 of each of the sensing electrodes 111 and 112 is linearly decreased along a lateral direction thereof. However, the sensing electrodes 111 and 112 are not limited to the exemplified embodiments in their shapes, and it may be configured in various shapes if necessary.

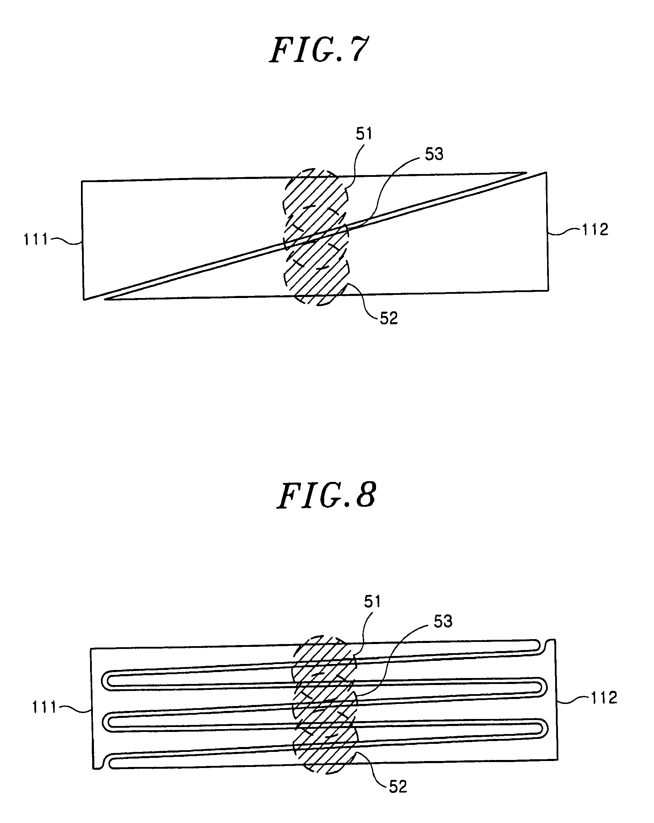

Figs. 7 and 8 describe a principle in which an accuracy of detecting the touch position is enhanced by the shape and arrangement of the sensing electrodes 111 and 112 described above. Fig. 7 shows an example that the sensing electrodes 111 and 112 are configured to have a simple triangular shape instead of having the convex part 113 and the concave part 114. In the example of the present invention shown in Fig. 7, the two sensing electrodes 111 and 112 are bounded in parallel. Here, in the two sensing electrodes 111 and 112 as shown in Fig. 7, assuming that the finger is touched to three positions 51, 52 and 53 having the same X-direction coordinate, the detected coordinate for the touch position 51 reads to be deflected to a left side because an area occupied by the sensing electrode 111 at left is wide with respect to the touched position 51. Due to the same reason, the detected coordinate for the touched position 52 reads to be deflected to a right side. Hence, but for the sensing electrodes 111 and 112 having the configuration in accordance with the embodiment of the present invention were not employed, there may be a problem in that the Y-direction coordinate and a touch area can have an effect on the detected X-direction coordinate of the touch position.

On the contrary, as shown in Fig. 8, according to the shape and arrangement of the sensing electrodes 111 and 112 of the present invention in which each of the sensing electrodes 111 and 112 includes a plurality of individual convex parts 113 and concave parts 114, the detected X-direction coordinate of the touched position is minimally affected by the Y-direction coordinate. Accordingly, an accuracy of detecting the X-direction coordinate is increased.

Further, as shown in Fig. 8, each of the sensing electrodes 111 and 112 is split into a plurality of sub-electrodes but they are electrically connected each other, and thus the number of the conductive wires 130 is same as Fig. 7. Consequently, the touch position can be accurately detected with remaining a width of the bezel area 122.

Considering a minimum touch area by the finger, a maximum width W of the convex part 113 shown in Fig. 2 is preferably designed to be equal to or less than 5 mm. Further, space between the two sensing electrodes 111 and 112 may not be less than 100 µm, preferably not less than 200 µm in order not to increase parasitic capacitance between the two sensing electrodes 111 and 112.

It has been shown and described the shape and arrangement of the sensing electrodes 111 and 112 applicable to the touch sensing panel with the single-layer structure hereinbefore. The suggested shape and structure are mainly applied to the touch sensing panel of the single-layer structure having less freedom for arranging the sensing electrodes 111 and 112, but may also be applied to the sensing electrode provided on each layer in the touch sensing panel with the multi-layer structure. In this case, the same effects as those acquired by the present invention can be obtained.

Even though embodiments where the sensing electrodes 111 and 112 are formed to extend in the X-direction has been described hereinbefore, it is also possible to configure such that the sensing electrodes 111 and 112 are formed to extend in the Y-direction and are arranged at a plurality of positions in the X-direction.

In accordance with the embodiment of the present invention, when the sensing electrodes 111 and 112 are substantially formed of the transparent conducting material, the touch sensing panel in accordance with the embodiment of the present invention can be considered as a touch screen panel. Further, it is understood that an electrode structure in accordance with the embodiment of the present invention can also be applied to a conventional touch sensing device such as a touch pad, a touch key pad and the like regardless of material of the sensing electrodes 111 and 112.

While the invention has been shown and described with respect to the embodiment, it will be understood by those skilled in the art that various changes and modifications may be made without departing from the scope of the invention as defined in the following claims.

## Claims

1. A touch sensing panel comprising:
a plurality of sensing electrodes arranged on a surface of a substrate; and
a conductive wire connected to one sides of the plurality of the sensing electrodes,
wherein each of the sensing electrodes includes:
at least one concave part extended from the one side toward the other side at opposite direction to the one side, and at least one convex part indented toward the one side; and
wherein the concave part in each of the sensing electrodes is disposed to be inserted into the convex part of the opponent sensing electrodes adjacent thereto.

2. The touch sensing panel of claim 1, wherein the surface on which the sensing electrodes are formed is the only surface of the substrate.

3. The touch sensing panel of claim 1, wherein the concave part gradually decreases in width from the one side toward the other side and the convex parts gradually increase in width toward the one side.

4. The touch sensing panel of claim 1, wherein the substrate having the sensing electrodes formed thereon is attached to a display window of an electronic device.

5. The touch sensing panel of claim 1, wherein each sensing electrode is formed of a transparent conductive material.

6. The touch sensing panel of claim 1, wherein two sensing electrodes being adjacent each other form an area in a rectangular shape in such a manner that concave parts and the convex parts thereof are crossed.

7. The touch sensing panel of claim 1, wherein each sensing electrode includes a plurality of the concave parts and the plurality of the concave parts are provided to face in parallel in a same direction.

8. A touch sensing panel having a single-layer electrode comprising:
a plurality of sensing electrodes to form the single-layer electrode;
wherein at least a part of the plurality of the sensing electrodes is formed to have a saw-like shape and each of the plurality of the sensing electrodes is arranged through saw teeth thereof to be engaged with at least one of neighboring sensing electrodes.

9. The touch sensing panel of claim 8, wherein a length of the saw teeth in a concave direction is larger than a width of the saw teeth.

10. The touch sensing panel of claim 8, wherein a width of the saw teeth is not larger than 5 mm.

11. The touch sensing panel of claim 8, wherein two sensing electrodes being adjacent each other form an area in a rectangular shape in such a manner that the saw teeth thereof are engaged.

12. The touch sensing panel of claim 8, wherein a pitch between the two adjacent sensing electrodes arranged to be engaged each other through the saw teeth thereof is not less than 100 µm.

13. A touch sensing device comprising:
sensing electrodes arranged on a surface of a substrate to form a sensing area, each sensing electrode being extended along with a first axis; and
a touch sensing unit electrically connected to the sensing electrodes;
wherein each of the sensing electrodes is divided into a plurality of sub-electrodes extending along the first axis in the sensing area, and
wherein at least one sub-electrode in the sensing electrode is disposed between the plurality of sub-electrodes dividing another sensing electrodes.

14. The touch sensing device of claim 13, wherein the touch sensing unit senses a touch using a change of capacitance generated in the sensing electrodes caused by the touch.

15. The touch sensing device of claim 13, wherein the touch sensing unit senses a touch input based on the change of capacitance generated in two or more sub-electrodes in the sensing electrodes different from each other.

16. The touch sensing device of claim 13, wherein the sub-electrodes have a width no more than 5 mm.

17. The touch sensing device of claim 13, wherein a pitch between the sensing electrodes facing each other is not less than 100 µm.

18. The touch sensing device of claim 13, wherein some of the plurality of the sub-electrodes is decreased along the first axis-direction in width and the remainder of the plurality of the sub-electrodes is increased in width along the first axis-direction.
